Europäisches Patentamt

(19) European Patent Office

Office européen des brevets

(11) Publication number: **0 077 403**

**B1**

(12) **EUROPEAN PATENT SPECIFICATION**

(45) Date of publication of patent specification: **27.08.86**

(21) Application number: **82901160.0**

(22) Date of filing: **22.04.82**

(86) International application number:
**PCT/JP82/00136**

(87) International publication number:
**WO 82/03692 28.10.82 Gazette 82/26**

(51) Int. Cl.⁴: **G 01 P 3/46**

(54) **SPEED DETECTING DEVICE.**

(30) Priority: **22.04.81 JP 60964/81**

(43) Date of publication of application:
**27.04.83 Bulletin 83/17**

(45) Publication of the grant of the patent:
**27.08.86 Bulletin 86/35**

(84) Designated Contracting States:
**DE FR GB**

(56) References cited:
**FR-A-2 128 567**
**GB-A-1 141 433**
**JP-A-47 032 856**
**JP-A-50 110 675**
**JP-A-50 137 582**
**JF-B-46 020 676**
**US-A-2 979 623**
**US-A-3 735 257**
**US-A-3 882 402**
**US-A-3 902 116**

(73) Proprietor: **FANUC LTD**
**3580, Shibokusa Aza-Komanba Oshino-mura**
**Minamitsuru-gun Yamanashi 401-05 (JP)**

(72) Inventor: **ISHIDA, Hiroshi**
**2-2-73, Matsubara-cho Hamura-machi**
**Nishitama-gun Tokyo 190-11 (JP)**
Inventor: **FUJIOKA, Yoshiki**
**Green-town 3-306 3-1293-10, Tateno**
**Higashiyamato-shi Tokyo 189 (JP)**
Inventor: **OTA, Naoto**
**1953-19, Hino Hino-shi**
**Tokyo 191 (JP)**

(74) Representative: **Billington, Lawrence Emlyn**
**et al**
**HASELTINE LAKE & CO Hazlitt House**
**28 Southampton Buildings Chancery Lane**
**London WC2A 1AT (GB)**

Courier Press, Leamington Spa, England.

## Description

The present invention relates to a speed detecting apparatus.

DC and AC motors are controlled while data on the actual speeds of the motors are being fed back in a feedback loop. For example, in an AC motor control system in which the AC motor is driven by primary three-phase current commands generated by digital processing, the speed difference $\Delta v$ between a commanded speed and an actual speed and the actual speed n are supplied as inputs, and digital processing is carried out on the basis of $\Delta v$, n to produce the outputs of primary three-phase current commands having a predetermined frequency and a predetermined amplitude.

Driving the spindle in a machine tool with an AC motor requires that the spindle be rotatable in a wide range of from low to high speeds. For accurate control, the speeds of rotation, both low and high, should be detected accurately.

According to a conventional speed detecting system, two-phase signals PA, PB which are $\pi/2$ out of phase with each other and have a frequency f proportional to the speed of rotation of the motor are generated, then the two-phase signals PA, PB are converted by a quadrupling circuit into signals of a frequency 4f, and finally a voltage (actual-speed voltage TSA) proportional to the speed of rotation is produced as an output by a frequency-to-voltage converter which serves to generate a voltage in proportion to the frequency 4f. Such a system is described in the document "DATA ACQUISITION" published by Analog Devices Inc., Mass. U.S.A. in 1982. With the prior system, however, as the pulse frequency becomes lower, the output voltage value from the frequency-to-voltage converter goes out of proportion to the frequency and is rapidly reduced. For this reason, the known system has not been suitable for the detection of speeds of AC motors which rotate at extremely low speeds.

US—A—3 902 116 describes an electronic tachometer, the resulting output of which is extremely accurate even at low velocities. The two quadrature signals in this tachometer are differentiated to generate four velocity signals and the quadrature signals are also used to generate the timing. The timing information is used to control FET gates to select a positive portion of the four velocity signals.

US—A—3 882 402 discloses a rate signal generator which uses two sinusoidal signals with a relative phase of 90 degrees. There is an inverting amplifier which produces an inverted output. The outputs of NAND circuits produce four phase signals. Differentiator circuits form derivatives of sine waves, inverted sine waves, cosine waves and inverted cosine waves. The signal from a summing circuit appears as a rectified, unfiltered DC output signal. Increases in velocity increase the signal magnitude but the polarity does not change.

According to the present invention, there is provided a speed detecting apparatus having a detector for generating two-phase sine-wave signals PA, PB which are $\pi/2$ out of phase with each other and have a frequency proportional to the speed of rotation of a motor so that output voltages can be produced which depend on the speed of rotation of the motor through the use of the sine-wave signals PA, PB, thus detecting the speed, comprising a frequency-to-voltage converter for producing a voltage dependent upon the frequency of the sine-wave signals, and characterised by an inverter circuit for inverting the phases of the two-phase sine-wave signals PA, PB to produce output signals *PA, *PB, a synchronous rectifier circuit for being supplied with the sine-wave signals PA, PB, *PA, *PB directly or via a differentiating circuit to rectify the supplied signals in synchronism and combine them, a detector circuit for detecting whether the speed of rotation of the motor is greater or smaller than a predetermined value, and analog switches for delivering an output voltage produced by the frequency-to-voltage converter at a high speed and an output voltage produced by the synchronous rectifier circuit at a low speed in response to switching signals from the detector circuit. With the present invention, the output voltage $V_H$ from the frequency-to-voltage converter and the output voltage $V_L$ from the synchronous rectifier circuit are selectively issued as an actual-speed voltage TSA dependent on the speed of motor. This allows the actual-speed voltage TSA to be proportional to the number n of RPM in a range of from low to high speeds so that the speed of motor can be detected accurately.

Brief Description of the Drawings

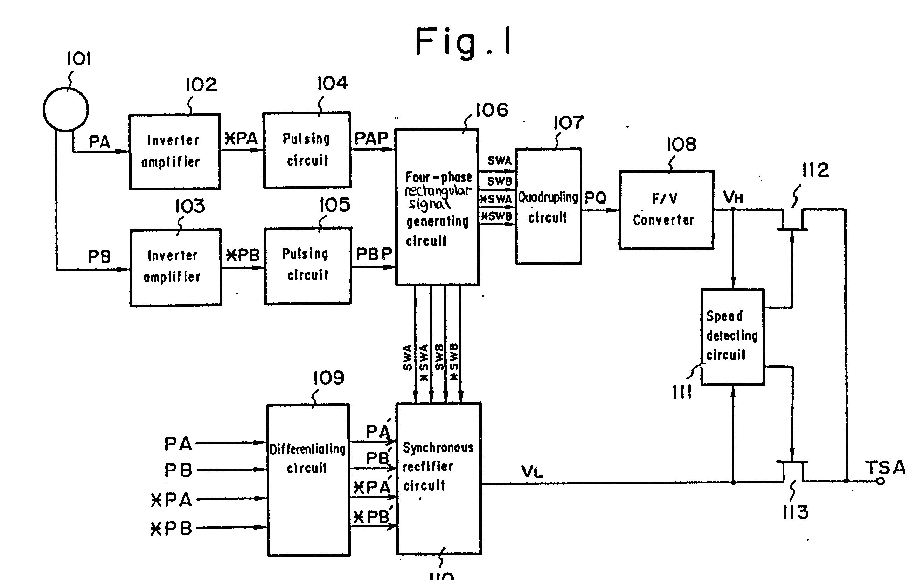

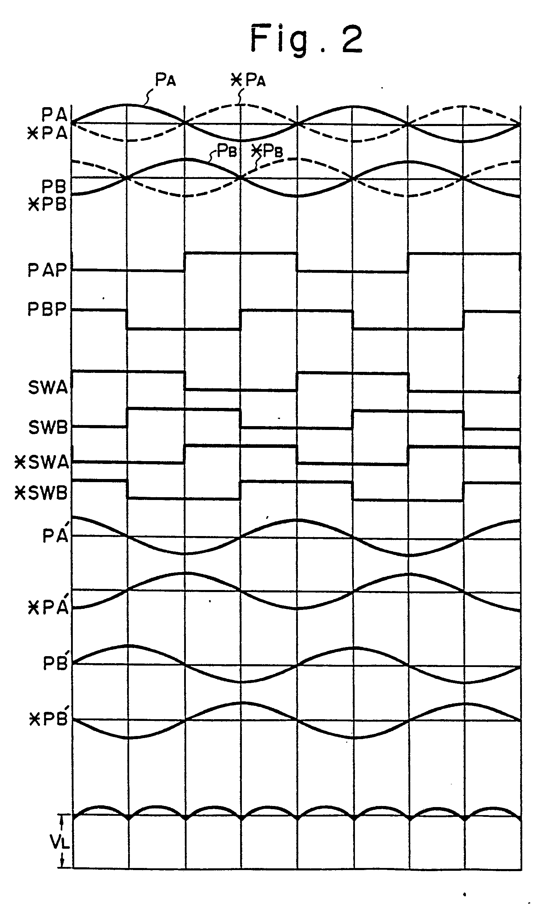

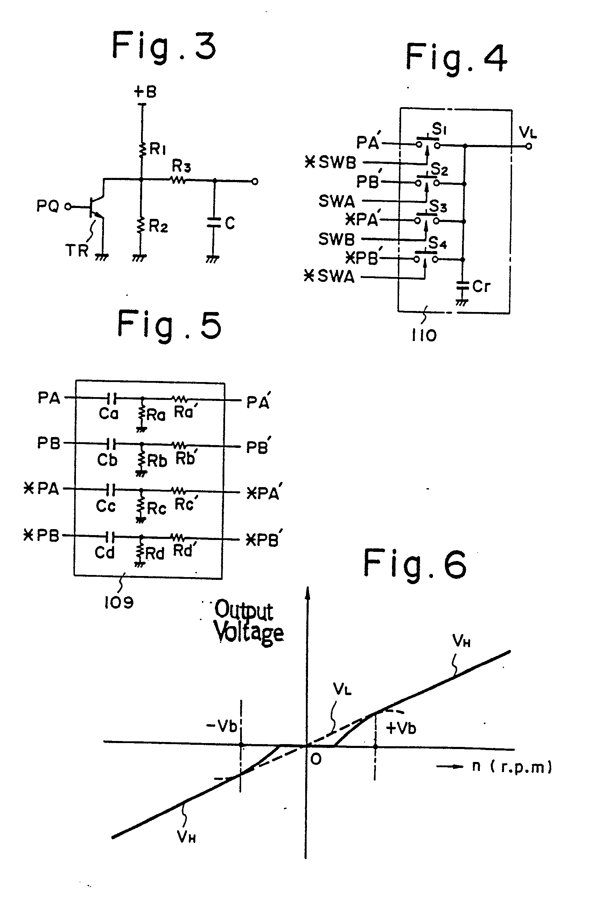

Fig. 1 is a block diagram of an example embodiment of the present invention; Fig. 2 is a diagram showing various signal waveforms of Fig. 1; Fig. 3 is a circuit diagram of the frequency-to-voltage converter of Fig. 1; Fig. 4 is a circuit diagram of the synchronous rectifier circuit of Fig. 1; Fig. 5 is a circuit diagram of the differentiating circuit of Fig. 1; and Fig. 6 is a diagram explanatory of the operation of the embodiment of Fig. 1.

An example embodiment of the present invention will hereinafter be described in greater detail with reference to the accompanying drawings.

Designated in Fig. 1 at 101 is a pulse generator such as a resolver, a magnetic sensor or the like for generating two two-phase sine-wave signals PA, PB (see Fig. 2) which are proportional to the speed of rotation of a motor (not shown) and 90° out of phase with each other. Inverter amplifiers 102, 103 serve to produce signals *PA, *PB that are 180° out of phase with the sine-wave signals PA, PB. Pulsing circuits 104, 105 are supplied as inputs with the signals *PA, *PB and convert them into rectangular signals PAP, PBP, the pulsing circuits comprising slicer circuits, for instance, having a slice level of zero volt. Designates at 106 is a four-phase signal generator circuit for producing as outputs four-phase rectangular signals SWA, SWB, *SWA, *SWB using the rectangular signals PAP, PBP, 107 a quadrupling circuit for producing a signal PQ of a fourfold frequency utilizing positive-going edges of the four-phase signals SWA—*SWB, and 108 a frequency-to-voltage converter for producing an output voltage $V_H$ which becomes proportional to the frequency of a train of input pulses when the frequency reaches a predetermined value or goes higher. As shown in Fig. 3, the frequency-to-voltage converter 108 comprises a transistor TR which can be turned on and off by the quadrupled frequency signal PQ, resistors $R_1$—$R_3$, and a capacitor C, the resistors $R_1$, $R_2$, $R_3$ and the capacitor C constituting an integrating circuit. A differentiating circuit 109 serves to differentiate the sine-wave signals PA, PB, *PA, *PB to thereby generate differentiated output signals PA′, PB′, *PA′, *PB′. As illustrated in Fig. 5, the differentiating circuit 109 is composed of capacitors (Ca—Cd), resistors Ra—Rd, Ra′—Rd′ for producing the differentiated signals PA′, PB′, *PA′, *PB′ having amplitudes proportional to the speed of rotation of the motor by differentiating the sine-wave signals PA, PB, *PA, *PB. A synchronous rectifier circuit 110 is supplied with the differentiated signals PA′, PB′, *PA′, *PB′ from the differentiating circuit 109 and the rectangular signals SWA, SWB, *SWA, *SWB (Fig. 2) from the four-phase signal generator circuit 106 to rectify the differentiated signals PA′ to *PB′ in synchronism with the rectangular signals SWA, SWB, *SWA, *SWB to thereby produce an actual-speed signal $V_L$ as an output. In an alternative embodiment, the differentiating circuit 109 may be omitted and the synchronous rectifier circuit 110 receive the sine-wave signals PA, PB, *PA, *PB directly. Fig. 4 shows the synchronous rectifier circuit 110. As is apparent from Fig. 4, the synchronous rectifier circuit 110 comprises electronic switches $S_1$, $S_2$, $S_3$, $S_4$ which can be opened and closed by the rectangular signals SWA, SWB, *SWA, *SWB, the switches having input terminals fed with the differentiated signals PA′, PB′, *PA′, *PB′ and output terminals connected in common. A capacitor Cr is connected between the interconnected output terminals and ground. The interconnected output terminals may be coupled to an input of an analog adder with its output joined to the capacitor Cr. A speed detecting circuit 111 is supplied with the output voltage $V_H$ from the frequency-to-voltage converter (F/V converter) 108 and the output voltage $V_L$ from the synchronous rectifier circuit 110, or either one of the output voltages, to determine whether the actual speed of the motor is in a high-speed or low-speed range. When the actual speed is in the high-speed range, an analog switch (for example, FET) 112 at a later stage is rendered conductive to issue the voltage $V_H$ as the actual-speed voltage TSA. When the actual speed is in the low-speed range, an analog switch (for example, FET) 113 at a later stage is rendered conductive to issue the voltage $V_L$ as the actual-speed voltage TSA. The voltages $V_H$, $V_L$ are selectively delivered for the reasons that, as shown in Fig. 6, the output voltage $V_H$ from the F/V converter 108

is proportional to the number n of RPM of the motor in the high-speed range as indicated by the solid line, and the output voltage $V_L$ from the synchronous rectifier circuit 110 is proportional to the number n of RPM of the motor in the low-speed range as indicated by the dotted line. Accordingly, by setting up a speed range ±Vb at the ends of which the voltages $V_H$, $V_L$ are smoothly joined at intermediate points between the high-speed and low-speed ranges, the actual-speed voltage TSA can be kept in substantial proportion to the rotational speed n throughout the entire range.

According to the present invention, as described above, the actual-speed voltage is obtained by selecting the output voltage $V_H$ from the frequency-to-voltage converter and the output voltage $V_L$ from the synchronous rectifier circuit dependent on the speed of the motor. The actual speed voltage can be held in proportion to the number n of RPM in a wide speed range of from low to high speeds. The present invention is therefore suitable for use in motor speed control.

**Claims**

1. A speed detecting apparatus having a detector for generating two-phase sine-wave signals PA, PB which are π/2 out of phase with each other and have a frequency proportional to the speed of rotation of a motor so that output voltages can be produced which depend on the speed of rotation of the motor through the use of the sine-wave signals PA, PB, thus detecting the speed, comprising a frequency-to-voltage converter for producing a voltage dependent upon the frequency of said sine-wave signals, and characterised by an inverter circuit for inverting the phases of said sine-wave signals PA, PB to produce output signals (*PA, *PB), a synchronous rectifier circuit for being supplied with the four-phase sine-wave signals PA, PB, *PA, *PB directly or via a differentiating circuit to rectify the supplied signals in synchronism and combine them, a detector circuit for detecting whether the speed of rotation of the motor is greater or smaller than a predetermined value, and analog switches for delivering an output voltage produced by said frequency-to-voltage converter at a high speed and an output voltage produced by the synchronous rectifier circuit at a low speed in response to switching signals from the detector circuit.

2. A speed detecting apparatus according to claim 1, wherein said frequency-to-voltage converter comprises an integrating circuit comprising resistors and a capacitor.

3. A speed detecting apparatus according to claim 1, including a four-phase rectangular signal generator circuit for generating four-phase rectangular signals SWA, SWB, *SWA, *SWB from said two-phase sine-wave signals, the arrangement being such that four-phase differentiated signals PA′, PB′, *PA′, *PB′ obtained by differentiating said four-phase sine-wave signals PA, PB, *PA, *PB with said differentiating circuit are rectified and produced as outputs by said synchronous rectifier circuit in synchronism respectively with said four-phase rectangular signals SWA, SWB, *SWA, *SWB.

## Patentansprüche

1. Drehzahlerfassungseinrichtung mit einem Detektor zum Erzeugen von Zwei-Phasen-Sinuswellensignalen (PA, PB), die gegeneinander um $\pi/2$ phasenverschoben sind und eine Frequenz haben, die proportional zu der Drehzahl eines Motors ist, so daß Ausgangsspannungen, die von der Drehzahl des Motors abhängen, durch Verwendung der Sinuswellensignale (PA, PB) erzeugbar sind, um auf diese Weise die Drehzahl zu erfassen, mit einem Frequenz/Spannungs-Umsetzer zum Erzeugen einer Spannung in Abhängigkeit von der Frequenz der Sinuswellensignale und gekennzeichnet durch eine Inverterschaltung zum Invertieren der Phasen der Sinuswellensignale (PA, PB), um Ausgangssignale (*PA, *PB) zu erzeugen, eine Synchrongleichrichterschaltung, die mit den Vier-Phasen-Sinuswellensignalen (PA, PB, *PA, *PB) direkt oder über eine Differenzierschaltung versorgt ist, um die zugeführten Signale synchron gleichzurichten und zu kombinieren, eine Detektorschaltung zum Erfassen, ob die Drehzahl des Motors größer oder kleiner als ein vorbestimmter Wert ist, und Analogschalter zum Ausgeben einer Ausgangsspannung, die durch den Frequenz/Spannungs-Umsetzer bei einer hohen Drehzahl erzeugt ist, und einer Ausgangsspannung, die durch die Synchrongleichrichterschaltung bei einer niedrigen Drehzahl erzeugt ist, abhängig von Schaltsignalen von der Detektorschaltung.

2. Drehzahlerfassungseinrichtung nach Anspruch 1, bei der der Frequenz/Spannungs-Umsetzer eine integrierende Schaltung mit Widerständen und einem Kondensator enthält.

3. Drehzahlerfassungseinrichtung nach Anspruch 1, mit einer Vier-Phasen-Rechtecksignalgeneratorschaltung zum Erzeugen von Vier-Phasen-Rechtecksignalen (SWA, SWB, *SWA, *SWB) aus den Zwei-Phasen-Sinuswellensignalen, wobei die Anordnung derart beschaffen ist, daß differenzierte Vier-Phasen-Signale PA', PB', *PA', *PB'), die durch Differenzieren der Vier-Phasen-Sinuswellensignale (PA, PB, *PA, *PB) mittels der Differenzierschaltung erhalten sind, gleichgerichtet und als Ausgangssignale durch die Synchrongleichrichterschaltung jeweils synchron mit den Vier-Phasen-Rechtecksignalen (SWA, SWB, *SWA, *SWB) erzeugt werden.

## Revendications

1. Dispositif détecteur de vitesse comprenant un détecteur pour générer des signaux sinusoïdaux diphasés PA, PB, qui sont déphasés de $\pi/2$ l'un par rapport à l'autre, et dont la fréquence est proportionnelle à la vitesse de rotation d'un moteur, si bien que l'on peut produire des tensions · de sortie qui dépendent de la vitesse de rotation du moteur grâce à l'emploi de signaux sinusoïdaux PA, PB, en détectant ainsi la vitesse, comprenant: un convertisseur fréquence-tension pour délivrer une tension fonction de la fréquence desdits signaux sinusoïdaux et caractérisé par un circuit inverseur pour inverser les phases desdits signaux sinusoïdaux PA, PB, afin de produire des signaux de sortie (*PA, *PB), un circuit redresseur synchrone destiné à recevoir les signaux sinusoïdaux à quatre phases PA, PB, *PA, *PB, directement ou par l'intermédiaire d'un circuit différenciateur pour redresser les signaux appliqués en synchronisme et les combiner, un circuit détecteur pour détecter si la vitesse de rotation du moteur est supérieure ou inférieure à une valeur prédéterminée, et des commutateurs analogiques pour délivrer une tension de sortie produite par ledit convertisseur fréquence-tension à une vitesse élevée et une tension de sortie produite par le circuit redresseur synchrone à basse vitesse en réponse à des signaux de commutation venant du circuit détecteur.

2. Appareil détecteur de vitesse selon la revendication 1, dans lequel ledit convertisseur fréquence-tension comprend un circuit d'intégration avec des résistances et un condensateur.

3. Dispositif détecteur de vitesse selon la revendication 1, comprenant: un circuit générateur de signaux rectangulaires à quatre phases pour générer des signaux rectangulaires à quatre phases SWA, SWB, *SWA, *SWB, à partir desdits signaux sinusoïdaux diphasés, le montage étant tel que les signaux différenciés à quatre phases PA', PB', *PA', *PB', obtenus en différenciant lesdits signaux sinusoïdaux à quatre phases PA, PB, *PA, *PB, par ledit circuit différenciateur , sont redressés et délivrés comme sorties par ledit circuit redresseur synchrone en synchronisme respectivement avec lesdits signaux rectangulaires à quatre phases SWA, SWB, *SWA, *SWB.

# Fig.1

0 077 403

# Fig. 2

# Fig.3

# Fig.4

# Fig.5

# Fig.6

Output Voltage